# EUROPEAN PATENT APPLICATION

(11) **EP 4 280 368 A1**
(43) Date of publication of application: **22.11.2023**
(21) Application number: 22919278.6
(22) Date of filing: 02.04.2022
(51) Int. Cl.: H01M 50/543

(54) **BATTERY CELL, BATTERY AND ELECTRIC DEVICE**

(71) Applicant: Contemporary Amperex Technology Co., Ltd., Ningde, Fujian (CN)
(72) Inventor: FANG, Wumei, Ningde, Fujian 352100 (CN); JIANG, Liwen, Ningde, Fujian 352100 (CN); WU, Kai, Ningde, Fujian 352100 (CN)
(74) Representative: Rowlands, Stuart Michael
(86) International application number: PCT/CN2022/085082
(87) International publication number: WO 2023/184540

(57) **Abstract**

Provided are a battery cell, a battery and a power consumption device. The battery cell includes: a housing, the housing having a stepped structure at an end portion in a first direction; an electrode assembly, disposed within the housing, the electrode assembly including an electrode tab; and a first connector, disposed at the stepped structure, the first connector including a first pin, and the first pin being connected to the electrode tab of the electrode assembly, and the first connector being configured to be capable of being plugged with an external connector to achieve electrical connection between the battery cells. The embodiments of the present application could improve battery assembly efficiency.

## Description

### TECHNICAL FIELD

The present application relates to the field of battery technologies, and in particular, to a battery cell, a battery, a power consumption device, and a method and apparatus for producing a battery cell.

### BACKGROUND

Saving energy and reducing emissions is the key to the sustainable development of the automotive industry. In such circumstances, electric vehicles have become an important part of the sustainable development of the automotive industry due to their advantages of energy saving and environmental protection. For electric vehicles, battery technology is an important factor for their development.

The battery assembly process is relatively complicated, and requires a lot of time and manpower. Therefore, how to improve battery assembly efficiency has become a problem that needs to be solved.

### SUMMARY

The present application provides a battery cell, a battery, a power consumption device, and a method and apparatus for producing a battery cell, which could improve battery assembly efficiency.

In a first aspect, a battery cell is provided, including a housing, the housing having a stepped structure at an end portion in a first direction; an electrode assembly, disposed within the housing, the electrode assembly including an electrode tab; and a first connector, disposed at the stepped structure, the first connector including a first pin, and the first pin being connected to the electrode tab of the electrode assembly, and the first connector being configured to be capable of being plugged with an external connector to achieve electrical connection between the battery cells.

For a battery cell provided in an embodiment of the present application, a first pin of a first connector of a battery cell is connected to an electrode tab of an electrode assembly, and electrical connection between the battery cells can be achieved after an external connector is plugged with the first connector. That is, for the battery cell in the present application, the electrical connection between the battery cells can be achieved by plugging the first connector with the external connector. The conventional way to achieve the electrical connection between the battery cells is generally to provide an electrode terminal on the battery cell, and the electrode terminal needs to be welded to the bus component or be connected to the bus component through an adapting plate, and thus the electrical connection between the battery cells is achieved. This process increases the difficulty and consumes time for battery assembly. However, for the battery cell in the present application, the electrical connection between the battery cells can be achieved by plugging the first connector with the external connector. Thus, there is no need to provide an electrode terminal on the battery cell, and there is no need to provide a bus component to be connected to the electrode terminal, which improves the assembly efficiency, saves the space occupied by the bus component, and improves a utilization rate of the internal space of the battery. In addition, a housing of the battery cell has a stepped structure at an end portion in a first direction, and the first connector is disposed on the stepped structure. The stepped structure provides a space of the first connector, such that the first connector does not need to occupy an additional space inside the battery, thereby ensuring a reasonable utilization of the internal space of the battery and improving a utilization rate of the internal space of the battery.

In a possible implementation manner, the stepped structure includes a first stepped surface perpendicular to the first direction and a second stepped surface perpendicular to a second direction, the second direction is perpendicular to the first direction; the first connector is disposed on the second stepped surface, and the first pin is parallel to the first stepped surface and extends in a third direction z; or the first connector is disposed on the first stepped surface, and the first pin is parallel to the second stepped surface and extends in a third direction; and the third direction is perpendicular to the first direction and the second direction.

The stepped structure is provided with a first stepped surface perpendicular to the first direction and a second stepped surface perpendicular to the second direction, and in this way, an "L"-shaped structure composed of the first stepped surface and the second stepped surface forms a square space on the housing of the battery cell such that when the first connector is disposed at the stepped structure, it can be placed in the square space without occupying other areas in the battery.

In a possible implementation manner, when the first connector is disposed on the second stepped surface, in the second direction, a length of the first connector protruding from the second stepped surface is not greater than a length of the first stepped surface protruding from the second stepped surface; or when the first connector is disposed on the first stepped surface, in the first direction, a length of the first connector protruding from the first stepped surface is not greater than a length of the second stepped surface protruding from the first stepped surface.

When the first connector is disposed on the second stepped surface, in the second direction, a length of the first connector protruding from the second stepped surface is set to be not greater than a length of the first stepped surface protruding from the second stepped surface, so as to ensure that in the second direction, a space occupied by the first connector is completely the space where the first stepped surface is located, and thus the space of other areas inside the battery will not be occupied. Similarly, when the first connector is disposed on the first stepped surface, in the first direction, a length of the first connector protruding from the first stepped surface is set to be not greater than a length of the second stepped surface protruding from the first stepped surface, so as to ensure that in the first direction, a space occupied by the first connector is completely the space where the second stepped surface is located, and thus the space of other areas inside the battery will not be occupied.

In a possible implementation manner, a length of the first connector in the third direction is not greater than a length of the housing in the third direction.

A length of the first connector in the third direction is set to be not greater than a length of the housing in the third direction, so as to ensure that in the third direction, a space occupied by the first connector is completely the space occupied by the stepped structure, and thus the space of other areas inside the battery will not be occupied.

In a possible implementation manner, the first connector further includes a first plugging frame, and the external connector includes a second plugging frame and a second pin, and the first plugging frame is configured to be plugged with the second plugging frame such that the first pin and the second pin are connected.

When the first plugging frame of the first connector is plugged with the second plugging frame of the external connector, the first pin is connected to the second pin, to achieve electrical connection between the first connector and the external connector.

In a possible implementation manner, the electrode assembly includes a first electrode tab and a second electrode tab, the housing is provided with first connectors at both ends in the first direction, the first connectors are respectively connected to the first electrode tab and the second electrode tab, and polarities of the first electrode tab and the second electrode tab are opposite.

The housing is provided with first connectors at both ends in the first direction, such that the two first connectors at both ends are respectively connected to the first electrode tab and the second electrode tab, to achieve electrical connection between the battery cell and the first connector.

In a possible implementation manner, the first connector further includes a third pin configured to sample the battery cell.

By setting a third pin configured to sample the battery cell, information about the battery cell is obtained.

In a possible implementation manner, the first connector further includes a third plugging frame, the external connector further includes a fourth plugging frame and a fourth pin, and the third plugging frame is configured to be plugged with the fourth plugging frame such that the third pin and the fourth pin are connected.

When the third plugging frame of the first connector is plugged with the fourth plugging frame of the external connector, the third pin is connected to the fourth pin, to achieve electrical connection between the first connector and the external connector.

In a possible implementation manner, the first plugging frame and the third plugging frame are arranged in the third direction, and the second plugging frame and the fourth plugging frame are arranged in the third direction.

The first plugging frame and the third plugging frame are arranged in a third direction, to make full use of the space of the stepped structure. The first plugging frame is plugged with the second plugging frame and the third plugging frame is plugged with the fourth plugging frame, and accordingly, the second plugging frame and the fourth plugging frame are arranged in a third direction, to facilitate plugging.

In a second aspect, a battery is provided, including: a plurality of battery cells in the first aspect and any possible implementation manner of the first aspect; and a plurality of external connectors configured to be plugged with first connectors of the plurality of battery cells respectively to electrically connect the plurality of battery cells.

In a possible implementation manner, the plurality of the external connectors are integrally provided as a connection row.

The plurality of external connectors are integrally provided as a connection row, which can be plugged with the first connectors of the plurality of battery cells at the same time, so that the operation is convenient, the battery assembly is facilitated, and the assembly efficiency is improved.

In a possible implementation manner, the stepped structure includes a first stepped surface perpendicular to the first direction and a second stepped surface perpendicular to a second direction, the second direction is perpendicular to the first direction; and after the connection row is plugged with the first connector, in the second direction, a first distance of the connection row from the second stepped surface is not greater than a length of the first stepped surface protruding from the second stepped surface, where the first distance is a distance from the second stepped surface at a position on the connection row farthest from the second stepped surface in the second direction; or in the first direction, a second distance of the connection row from the first stepped surface is not greater than a length of the second stepped surface protruding from the first stepped surface, where the second distance is a distance from the first stepped surface at a position on the connection row farthest from the first stepped surface in the first direction.

After the connection row is plugged with the first connector, in the second direction, a first distance from the second stepped surface at a position on the connection row farthest from the second stepped surface is set to be not greater than a length of the first stepped surface protruding from the second stepped surface, so as to ensure that after the connection row is plugged with the first connector, a space occupied in the second direction is completely the space occupied by the first stepped surface without occupying the space of other areas inside the battery. Similarly, in the first direction, a second distance from the first stepped surface at a position on the connection row farthest from the first stepped surface is set to be not greater than a length of the second stepped surface protruding from the first stepped surface, so as to ensure that after the connection row is plugged with the first connector, a space occupied in the first direction is completely the space occupied by the second stepped surface, without occupying the space of other areas inside the battery.

In a third aspect, a power consumption device is provided, including: the battery in the second aspect and any possible implementation manner of the second aspect, where the battery is configured to provide electric energy for the power consumption device.

In a fourth aspect, a method for producing a battery cell is provided, including: providing a housing, the housing having a stepped structure at an end portion in a first direction; providing an electrode assembly, the electrode assembly being disposed within the housing, the electrode assembly including an electrode tab; and providing a first connector, the first connector being disposed at the stepped structure, the first connector including a first pin, and the first pin being connected to the electrode tab of the electrode assembly, and the first connector being configured to be capable of being plugged with an external connector to achieve electrical connection between the battery cells.

In to a fifth aspect, an apparatus for producing a battery cell is provided, including: a first providing module, configured to provide a housing, the housing having a stepped structure at an end portion in a first direction; a second providing module, configured to provide an electrode assembly, the electrode assembly being disposed within the housing, the electrode assembly including an electrode tab; and a third providing module, configured to provide a first connector, the first connector being disposed at the stepped structure, the first connector including a first pin, and the first pin being connected to the electrode tab of the electrode assembly, and the first connector being configured to be capable of being plugged with an external connector to achieve electrical connection between the battery cells.

In the technical solution of the present application, a first pin of a first connector of a battery cell is connected to an electrode tab of an electrode assembly, and electrical connection between the battery cells can be achieved after an external connector is plugged with the first connector. That is, for the battery cell in the present application, the electrical connection between the battery cells can be achieved by plugging the first connector with the external connector. The conventional way to achieve the electrical connection between the battery cells is generally to provide an electrode terminal on the battery cell, and the electrode terminal needs to be welded to the bus component or be connected to the bus component through an adapting plate, and thus the electrical connection between the battery cells is achieved. This process increases the difficulty and consumes time for battery assembly. However, for the battery cell in the present application, the electrical connection between the battery cells can be achieved by plugging the first connector with the external connector. Thus, there is no need to provide an electrode terminal on the battery cell, and there is no need to provide a bus component to be connected to the electrode terminal, which improves the assembly efficiency, saves the space occupied by the bus component, and improves a utilization rate of the internal space of the battery. In addition, a housing of the battery cell has a stepped structure at an end portion in a first direction, and the first connector is disposed on the stepped structure. The stepped structure provides a space of the first connector, such that the first connector does not need to occupy an additional space inside the battery, thereby ensuring a reasonable utilization of the internal space of the battery and improving a utilization rate of the internal space of the battery.

### BRIEF DESCRIPTION OF THE DRAWINGS

To describe technical solutions in embodiments of the present application more clearly, the following briefly introduces accompanying drawings required for describing the embodiments of the present application. It will be apparent that the accompanying drawings in the following description are only some embodiments of the present application, and those of ordinary skill in the art may still derive other drawings from the accompanying drawings without creative efforts.
FIG. 1 is a schematic structural diagram of a vehicle disclosed in an embodiment of the present application;
FIG. 2 is a schematic structural diagram of a battery disclosed in an embodiment of the present application;
FIG. 3 is a schematic structural diagram of a battery cell disclosed in an embodiment of the present application;
FIG. 4 is a schematic structural diagram of a battery cell disclosed in an embodiment of the present application;
FIG. 5 is a schematic structural diagram of a first connector disclosed in an embodiment of the present application;
FIG. 6 is a schematic structural diagram of an external connector disclosed in an embodiment of the present application;
FIG. 7 is a schematic structural diagram of a battery disclosed in an embodiment of the present application;
FIG. 8 is a schematic structural diagram of a battery disclosed in an embodiment of the present application;
FIG. 9 is a schematic flowchart of a method for producing a battery cell according to an embodiment of the present application; and
FIG. 10 is a schematic block diagram of an apparatus for producing a battery cell according to an embodiment of the present application.

### DESCRIPTION OF EMBODIMENTS

Embodiments of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that unless otherwise stated, the meaning of "a plurality of' means two or more, orientations or positional relationships indicated by terms such as "up", "down", "left", "right", "inside" and "outside" are merely for convenience of describing the present application and for simplifying the description, but not for indicating or implying that an indicated apparatus or element must have a specific orientation and/or must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within the allowable range of error. "Parallel" is not strictly parallel, but within an allowable range of error.

The terms representing directions in the following description are all directions shown in the drawings, which is not for limiting the specific structure of the present application. In the description of the present application, it should be noted that unless otherwise explicitly specified and limited, the terms "installation", "interconnection" and "connection" should be understood in a broad sense, for example, they may either be a fixed connection, a detachable connection, or an integrated connection; and they may either be a direct connection or an indirect connection through an intermediate medium. Those of ordinary skill in the art may understand the specific meanings of the foregoing terms in the present application according to a specific situation.

In the present application, the term "and/or" is only an association relation describing associated objects, which means that there may be three relations, for example, A and/or B may represent three situations: A exists alone, both A and B exist, and B exists alone. In addition, the character "/" in the present application generally indicates that the associated objects before and after the character are in an "or" relation.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiments are included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described in the present application may be combined with another embodiment.

Although the present application has been described with reference to the preferred embodiments, various improvements may be made to the present application and the components therein may be replaced with equivalents without departing from the scope of the present application. In particular, as long as there is no structural conflict, various technical features mentioned in the various embodiments may be combined in any manner. The present application is not limited to the specific embodiments disclosed herein, and includes all technical solutions falling within the scope of the claims.

In the present application, a battery refers to a physical module including one or more battery cells to provide electric energy. For example, the battery mentioned in the present application may include a battery module or a battery pack. The battery generally includes a box for enclosing one or more battery cells. The box can prevent liquid or other foreign matters from affecting the charging or discharging of the battery cell.

Optionally, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. In some embodiments, a battery cell may also be referred to as a cell.

The battery cell includes an electrode assembly and an electrolyte, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, and the current collector not coated with the positive active material layer protrudes from the current collector coated with the positive active material layer and is used as a positive electrode tab. A lithium-ion battery is taken as an example, the material of the positive electrode current collector may be aluminum, and the positive electrode active material may be lithium cobalt oxides, lithium iron phosphate, ternary lithium or lithium manganate, or the like. The negative electrode sheet includes a negative electrode current collector and a negative active material layer. The negative active material layer is coated on a surface of the negative electrode current collector, and the current collector not coated with the negative active material layer protrudes from the current collector coated with the negative active material layer and is used as a negative electrode tab. The material of the negative electrode current collector may be copper, and the negative electrode active material may be carbon or silicon, and like. In order to ensure that a large current is passed without fusing, positive electrode tabs are multiple in number and stacked together, and negative electrode tabs are multiple in number and stacked together. A material of the separator may be polypropylene (PP), polyethylene (PE), or the like. In addition, the electrode assembly may be a winding structure or a laminated structure, and the embodiments of the present application are not limited thereto.

In order to meet different power requirements, the plurality of battery cells may be in series connection, parallel connection, or series-parallel connection, where the series-parallel connection refers to a combination of series connection and parallel connection. Optionally, the plurality of battery cells may be first connected in series, in parallel or in series and parallel to form battery modules, and then a plurality of battery modules are connected in series, in parallel or in series and parallel to form a battery. That is, a plurality of battery cells may directly form a battery, or may first form battery modules, and then the battery modules form a battery. The battery is further disposed in the power consumption device to provide electric energy for the power consumption device.

With the development of the battery technology, it is necessary to consider many design factors, such as energy density, cycle life, discharge capacity, C-rate, and other performance parameters. In addition, the technology of battery assembly should also be considered. The battery assembly process is relatively complicated, and requires a lot of time and manpower. Therefore, it is necessary to simplify the battery assembly process and improve the battery assembly efficiency.

A battery generally includes a plurality of battery cells, and electrical connection between the battery cells is usually achieved through a bus component inside the battery, for example, parallel connection, or series connection, or series-parallel connection. Specifically, the electrical connection between the battery cells may be achieved by the bus component connecting to electrode terminals of the battery cells. However, the battery cells connected through the bus component tend to form a suspended structure, and the bus component is also easily damaged due to external forces, for example, it is broken due to impact. Therefore, a beam or a spacer plate is usually added between the battery modules formed by the plurality of battery cells to reinforce the strength between the battery cells. However, this method will inevitably increase the battery assembly process, increase the difficulty of battery assembly, and reduce the battery assembly efficiency.

In view of this, the present application provides a battery cell, a first pin of a first connector of a battery cell is connected to an electrode tab of an electrode assembly, and electrical connection between the battery cells can be achieved after an external connector is plugged with the first connector. That is, for the battery cell in the present application, the electrical connection between the battery cells can be achieved by plugging the first connector with the external connector. The conventional way to achieve the electrical connection between the battery cells is generally to provide an electrode terminal on the battery cell, and the electrode terminal needs to be welded to the bus component or be connected to the bus component through an adapting plate, and thus the electrical connection between the battery cells is achieved. This process increases the difficulty and consumes time for battery assembly. However, for the battery cell in the present application, the electrical connection between the battery cells can be achieved by plugging the first connector with the external connector. Thus, there is no need to provide an electrode terminal on the battery cell, and there is no need to provide a bus component to be connected to the electrode terminal, which improves the assembly efficiency, saves the space occupied by the bus component, and improves a utilization rate of the internal space of the battery. In addition, a housing of the battery cell has a stepped structure at an end portion in a first direction, and the first connector is disposed on the stepped structure. The stepped structure provides a space of the first connector, such that the first connector does not need to occupy an additional space inside the battery, thereby ensuring a reasonable utilization of the internal space of the battery and improving a utilization rate of the internal space of the battery.

The technical solutions described in the embodiments of the present application are applicable to various power consumption devices using batteries. The power consumption device may be a vehicle, a cell phone, a portable device, a notebook computer, a ship, a spacecraft, an electric toy, an electric tool, or the like. The vehicle may be a fuel vehicle, a gas vehicle or a new energy vehicle; the new energy vehicle may be a pure electric vehicle, a hybrid vehicle or an extended range vehicle, etc.; the spacecraft include an airplane, a rocket, a space shuttle and a spaceship, etc.; the electric toy includes a fixed or mobile electric toy, such as a game console, an electric vehicle toy, an electric ship toy and an electric airplane toy, etc.; the electric tool includes a metal cutting power tool, a grinding power tool, an assembly power tool and a railway power tool, such as an electric drill, an electric grinder, an electric wrench, an electric screwdriver, an electric hammer, an impact drill, a concrete vibrator, and an electric planer, etc. The embodiment of the present application does not impose special restrictions on the above power consumption devices.

For the convenience of description, the following embodiments take a vehicle as an example of the power consumption device for description.

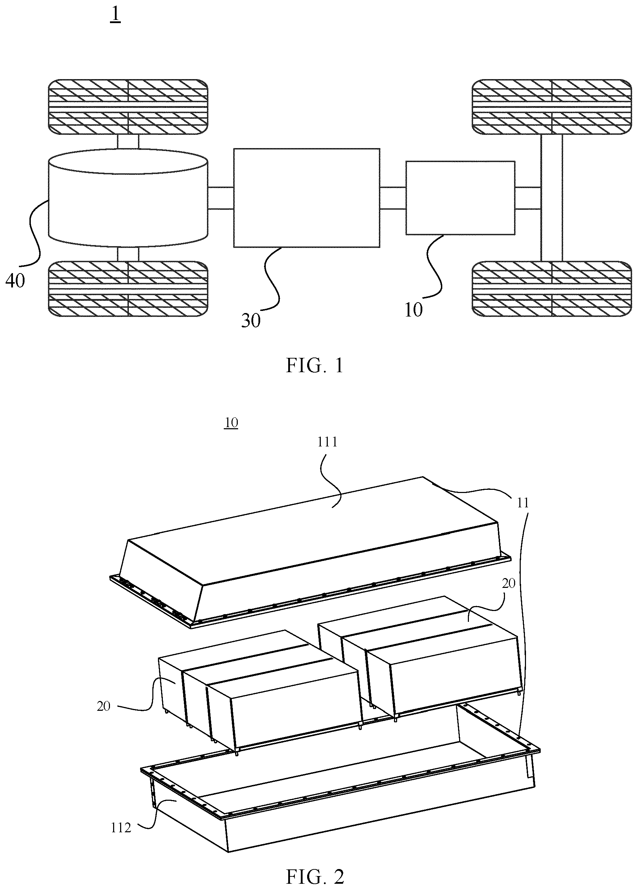

For example, as shown in FIG. 1, FIG. 1 is a schematic structural diagram of a vehicle 1 according to an embodiment of the present application. The vehicle 1 may be a fuel-powered vehicle, a gas-powered vehicle or a new-energy vehicle. The new-energy vehicle may be a battery electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be provided at the bottom or the head or the tail of the vehicle 1. The battery 10 may be configured to supply power to the vehicle 1. For example, the battery 10 can be used as an operation power supply of the vehicle 1 and is used for a circuit system of the vehicle 1, for example, for a working power demand of the vehicle 1 during startup, navigation and running. In another embodiment of the present application, the battery 10 may be used not only as an operating power source for the vehicle 1 but also as a driving power source for the vehicle 1, replacing or partially replacing fuel or natural gas to provide driving power for the vehicle 1.

The battery 10 may include a plurality of battery cells. For example, as shown in FIG. 2, FIG. 2 is a schematic structural diagram of a battery 10 according to an embodiment of the present application, and the battery 10 may include at least one battery module 200. The battery module 200 includes a plurality of battery cells 20. The battery 10 may further include a box 11 with the interior thereof being a hollow structure, and the plurality of battery cells 20 are accommodated in the box 11. As shown in FIG. 2, the box may include two portions, which are referred to as a first portion 111 (upper box) and a second portion 112 (lower box), respectively, and the first portion 111 and the second portion 112 are fastened together. The shapes of the first portion 111 and the second portion 112 may be determined according to the shape of the combined plurality of battery cells 20, and at least one of the first portion 111 and the second portion 112 has an opening. For example, as shown in FIG. 2, the first portion 111 and the second portion 112 each may be a hollow cuboid and each have only one surface as an opening face, an opening of the first portion 111 is arranged opposite to an opening of the second portion 112, and the first portion 111 and the second portion 112 are fastened to each other to form the box 11 with a closed chamber. For another example, different from that shown in FIG. 2, only one of the first portion 111 and the second portion 112 may be a hollow cuboid with an opening, while the other may be a plate shape, so as to cover the opening. For example, in an example that the second portion 112 is a hollow cuboid and has only one face as an opening face and the first portion 111 is in a plate shape, an opening of the second portion 112 is covered by the first portion 111 to form the box 11 with a closed chamber, and the chamber may be configured to accommodate the plurality of battery cells 20. The plurality of battery cells 20 are combined in parallel connection or series connection or series-parallel connection and are then placed in the box 11 formed by fastening the first portion 111 to the second portion 112.

According to different power requirements, the number of the battery cells 20 may be set to any value. The plurality of battery cells 20 may be connected in series or in parallel or in series and parallel to implement larger capacity or power. Since the number of battery cells 20 included in each battery 10 may be large, the battery cells 20 may be provided in groups for convenience of installation, and each group of battery cells 20 constitutes a battery module. The number of the battery cells 20 included in the battery module is not limited and may be set as required. The battery may include a plurality of battery modules, and these battery modules may be connected in series, in parallel or in series and parallel.

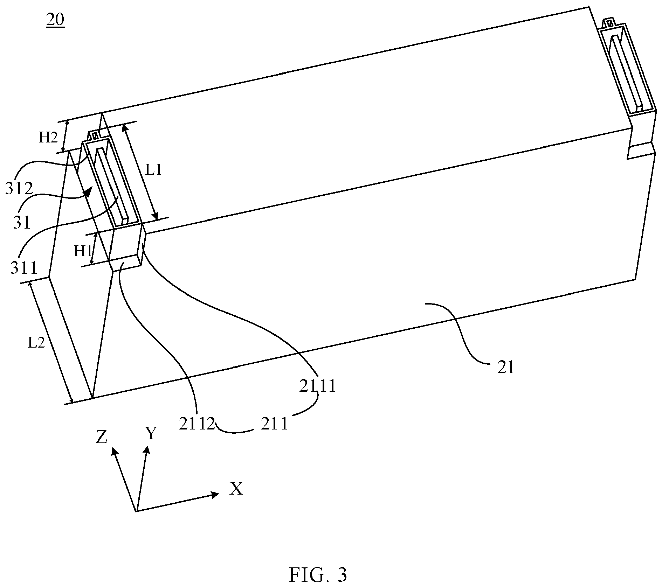

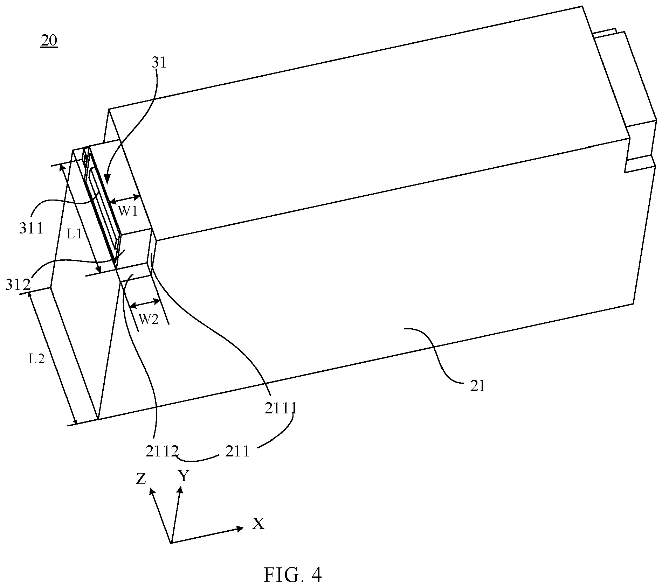

A battery cell 20 provided by an embodiment of the present application will be described in detail below with reference to FIG. 3 and FIG. 4.

As shown in FIG. 3, FIG. 3 is a schematic structural diagram of a battery cell 20 provided in an embodiment of the present application. The battery cell 20 includes a housing 21, an electrode assembly, and a first connector 31. The housing 21 has a stepped structure 211 at an end portion in a first direction x, the electrode assembly is dispose within the housing 21, the electrode assembly includes an electrode tab, the first connector 31 is disposed at the stepped structure 211, the first connector 31 includes a first pin 311, the first pin 311 is connected to the electrode tab of the electrode assembly, and the first connector 31 is configured to be capable of being plugged with an external connector 32 to achieve electrical connection between the battery cells 20.

The stepped structure 211 of the housing 21 may be obtained by various processing techniques, such as stamping, machining, etc. The housing 21 and the stepped structure 211 may also be integrally formed, which is not limited in the present application.

The electrode assembly is a component in the battery cell 20 where electrochemical reaction occurs. The electrode assembly may be a cylinder, a cuboid, etc. If the electrode assembly is a cylinder structure, the housing 21 may also be a cylinder structure. If the electrode assembly is a cuboid structure, the housing 21 may also be a cuboid structure.

The first connector 31 refers to an electronic device that has function of transmitting signals and conducting current, for example, it may be a BTB/FPC connector, a Type-C connector, a USB connector, etc., which is not limited in the present application.

Since a first pin 311 of a first connector 31 of a battery cell 20 is connected to an electrode tab of an electrode assembly, and electrical connection between the battery cells 20 can be achieved after an external connector 32 is plugged with the first connector 31. That is, for the battery cell 20 in the present application, the electrical connection between the battery cells 20 can be achieved by plugging the first connector 31 with the external connector 32. The conventional way to achieve the electrical connection between the battery cells 20 is generally to provide an electrode terminal on the battery cell 20, and the electrode terminal needs to be welded to the bus component or be connected to the bus component through an adapting plate, and thus the electrical connection between the battery cells 20 is achieved. This process increases the difficulty and consumes time for assembly of the battery 10. However, for the battery cell 20 in the present application, the electrical connection between the battery cells 20 can be achieved by plugging the first connector 31 with the external connector 32. Thus, there is no need to provide an electrode terminal on the battery cell 20, and there is no need to provide a bus component to be connected to the electrode terminal, which improves the assembly efficiency, saves the space occupied by the bus component, and improves a utilization rate of the internal space of the battery 10. In addition, a housing 21 of the battery cell 20 has a stepped structure 211 at an end portion in a first direction x, and the first connector 31 is disposed on the stepped structure 211. The stepped structure 211 provides a space of the first connector 31, such that the first connector 31 does not need to occupy an additional space inside the battery 10, thereby ensuring a reasonable utilization of the internal space of the battery 10 and improving a utilization rate of the internal space of the battery 10.

In an embodiment of the present application, the stepped structure 211 includes a first stepped surface 2111 perpendicular to the first direction x and a second stepped surface 2112 perpendicular to a second direction y, and the second direction y is perpendicular to the first direction x. As shown in FIG. 3, the first connector 31 is disposed on the second stepped surface 2112, and the first pin 311 is parallel to the first stepped surface 2111 and extends in a third direction z. Alternatively, as shown in FIG. 4, the first connector 31 is disposed on the first stepped surface 2111, and the first pin 311 is parallel to the second stepped surface 2112 and extends in a third direction z; and the third direction z is perpendicular to the first direction x and the second direction y.

The stepped structure 211 is provided with a first stepped surface 2111 perpendicular to the first direction x and a second stepped surface 2112 perpendicular to the second direction y, and in this way, an "L"-shaped structure composed of the first stepped surface 2111 and the second stepped surface 2112 forms a square space on the housing 21 of the battery cell 20 such that when the first connector 31 is disposed at the stepped structure 211, it can be placed in the square space without occupying other areas in the battery 10. The first connector 31 may be disposed on the first stepped surface 2111, and may also be disposed on the second stepped surface 2112. When the first connector 31 is disposed on the first stepped surface 2111, its first pin 311 is parallel to the second stepped surface 2112, and the external connector 32 is plugged with the first connector 31 in the first direction x. When the first connector 31 is disposed on the second stepped surface 2112, its first pin 311 is parallel to the first stepped surface 2111, and the external connector 32 is plugged with the first connector 31 in the second direction y.

In an embodiment of the present application, as shown in FIG. 3, when the first connector 31 is disposed on the second stepped surface 2112, in the second direction y, a length H1 of the first connector 31 protruding from the second stepped surface 2112 is not greater than a length H2 of the first stepped surface 2111 protruding from the second stepped surface 2112. Alternatively, as shown in FIG. 4, when the first connector 31 is disposed on the first stepped surface 2111, in the first direction x, a length W1 of the first connector 31 protruding from the first stepped surface 2111 is not greater than a length W2 of the second stepped surface 2112 protruding from the first stepped surface 2111.

When the first connector 31 is disposed on the second stepped surface 2112, in the second direction y, a length H1 of the first connector 31 protruding from the second stepped surface 2112 is set to be not greater than a length H2 of the first stepped surface 2111 protruding from the second stepped surface 2112, so as to ensure that in the second direction y, a space occupied by the first connector 31 is completely the space where the first stepped surface 2111 is located, and thus the space of other areas inside the battery 10 will not be occupied. Similarly, when the first connector 31 is disposed on the first stepped surface 2111, in the first direction x, a length W1 of the first connector 31 protruding from the first stepped surface 2111 is set to be not greater than a length W2 of the second stepped surface 2112 protruding from the first stepped surface 2111, so as to ensure that in the first direction x, a space occupied by the first connector 31 is completely the space where the second stepped surface 2112 is located, and thus the space of other areas inside the battery 10 will not be occupied.

In an embodiment of the present application, a length L1 of the first connector 31 in the third direction z is not greater than a length L2 of the housing 21 in the third direction z.

A length L1 of the first connector 31 in the third direction z is set to be not greater than a length L2 of the housing 21 in the third direction z, so as to ensure that in the third direction z, a space occupied by the first connector 31 is completely the space occupied by the stepped structure 211, and thus the space of other areas inside the battery 10 will not be occupied.

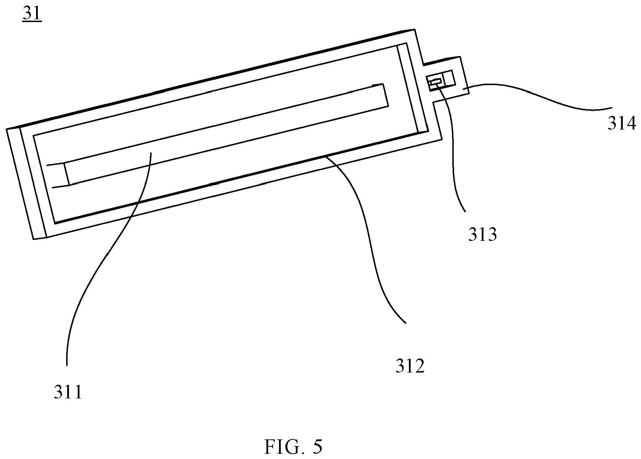

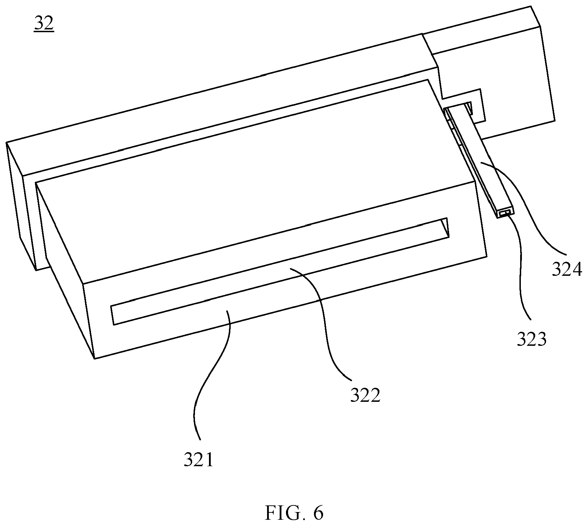

In an embodiment of the present application, as shown in FIG. 5, the first connector 31 further includes a first plugging frame 312, and as shown in FIG. 6, the external connector 32 includes a second plugging frame 322 and a second pin 321, and the first plugging frame 312 is configured to be plugged with the second plugging frame 322 such that the first pin 311 and the second pin 321 are connected.

Optionally, when the first pin 311 is located at the center of the first plugging frame 312, in order to facilitate that the first plugging frame 312 is smoothly plugged with the second plugging frame 322, the second pin 321 is disposed on an inner surface of the second plugging frame 322. The sizes of the first pin 311 and the second pin 321 are controlled to ensure that the first pin 311 and the second pin 321 can be fully connected when the first plugging frame 312 is plugged with the second plugging frame 322.

Optionally, when the second pin 321 is located at the center of the second plugging frame 322, in order to facilitate that the first plugging frame 312 is smoothly plugged with the second plugging frame 322, the first pin 311 is disposed on an inner surface of the first plugging frame 312. The sizes of the first pin 311 and the second pin 321 are controlled to ensure that the first pin 311 and the second pin 321 can be well connected when the first plugging frame 312 is plugged with the second plugging frame 322.

When the first plugging frame 312 of the first connector 31 is plugged with the second plugging frame 322 of the external connector 32, the first pin 311 is connected to the second pin 321, to achieve electrical connection between the first connector 31 and the external connector 32.

In an embodiment of the present application, the electrode assembly includes a first electrode tab and a second electrode tab, the housing 21 is provided with first connectors 31 at both ends in the first direction x, the first connectors 31 are respectively connected to the first electrode tab and the second electrode tab, and polarities of the first electrode tab and the second electrode tab are opposite.

The housing 21 is provided with first connectors 31 at both ends in the first direction x, such that the two first connectors 31 at both ends are respectively connected to the first electrode tab and the second electrode tab, to achieve electrical connection between the battery cell 20 and the first connector 31.

In an embodiment of the present application, the first connector 31 further includes a third pin 313 configured to sample the battery cell 20.

By setting a third pin 313 configured to sample the battery cell 20, information about the battery cell 20 is obtained.

In an embodiment of the present application, the first connector 31 further includes a third plugging frame 314, the external connector 32 further includes a fourth plugging frame 324 and a fourth pin 323, and the third plugging frame 314 is configured to be plugged with the fourth plugging frame 324 such that the third pin 313 and the fourth pin 323 are connected.

Optionally, when the third pin 313 is located at the center of the first plugging frame 312, in order to facilitate that the first plugging frame 312 is smoothly plugged with the second plugging frame 322, the fourth pin 323 is disposed on an inner surface of the second plugging frame 322. The sizes of the third pin 313 and the fourth pin 323 are controlled to ensure that the third pin 313 and the fourth pin 323 can be fully connected when the first plugging frame 312 is plugged with the second plugging frame 322.

Optionally, when the fourth pin 323 is located at the center of the second plugging frame 322, in order to facilitate that the first plugging frame 312 is smoothly plugged with the second plugging frame 322, the third pin 313 is disposed on an inner surface of the first plugging frame 312. The sizes of the third pin 313 and the fourth pin 323 are controlled to ensure that the third pin 313 and the fourth pin 323 can be fully connected when the first plugging frame 312 is plugged with the second plugging frame 322.

When the third plugging frame 314 of the first connector 31 is plugged with the fourth plugging frame 324 of the external connector 32, the third pin 313 is connected to the fourth pin 323, to achieve electrical connection between the first connector 31 and the external connector 32.

In an embodiment of the present application, the first plugging frame 312 and the third plugging frame 314 are arranged in the third direction z, and the second plugging frame 322 and the fourth plugging frame 324 are arranged in the third direction z.

The first plugging frame 312 and the third plugging frame 314 are arranged in a third direction z, to make full use of the space of the stepped structure 211. The first plugging frame 312 is plugged with the second plugging frame 322 and the third plugging frame 314 is plugged with the fourth plugging frame 324, and accordingly, the second plugging frame 322 and the fourth plugging frame 324 are arranged in a third direction z, to facilitate plugging.

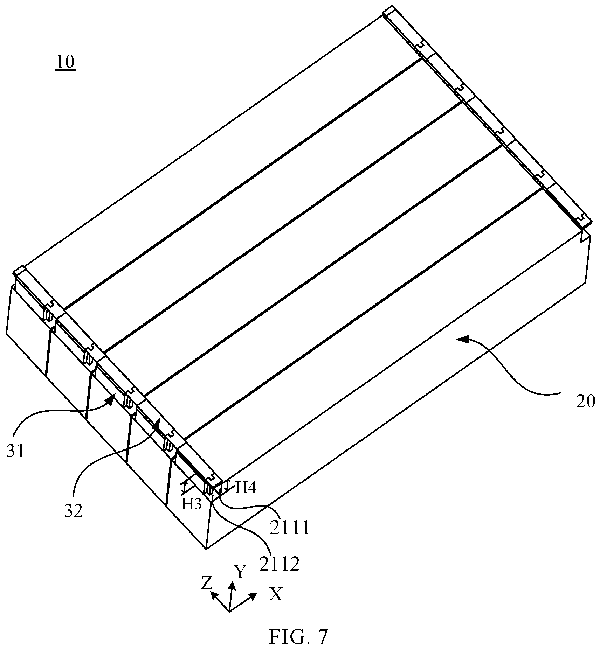

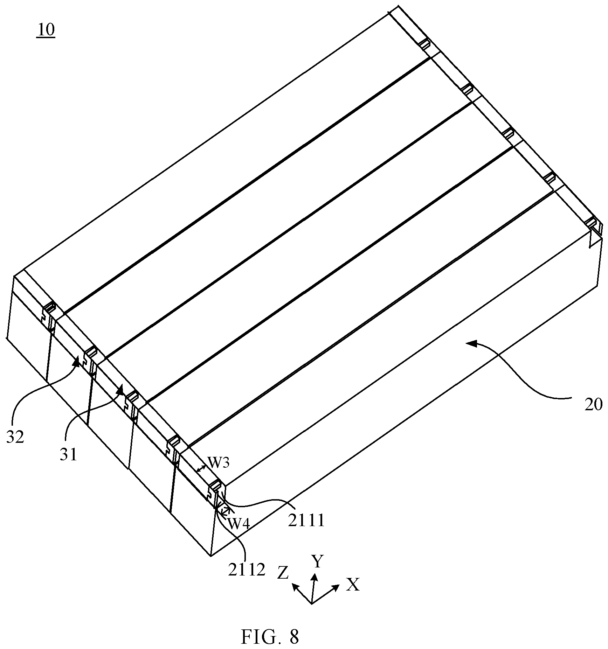

As shown in FIG. 7 and FIG. 8, an embodiment of the present application also provides a battery 10, including: a plurality of battery cells 20 as described in any of the foregoing embodiments, where the plurality of battery cells 20 are arranged in the three direction z; and a plurality of external connectors 32 configured to be plugged with first connectors 31 of the plurality of battery cells 20 respectively to electrically connect the plurality of battery cells 20.

In an embodiment of the present application, the plurality of the external connectors 32 are integrally provided as a connection row.

The plurality of external connectors 32 are integrally provided as a connection row, which can be plugged with the first connectors 31 of the plurality of battery cells 20 at the same time, so that the operation is convenient, the battery assembly is facilitated, and the assembly efficiency is improved.

In an embodiment of the present application, after the connection row is plugged with the first connector 31, as shown in FIG. 7, in the second direction y, a first distance H3 of the connection row from the second stepped surface 2112 is not greater than a length H4 of the first stepped surface 2111 protruding from the second stepped surface 2112, where the first distance H3 is a distance from the second stepped surface 2112 at a position on the connection row farthest from the second stepped surface 2112 in the second direction y. Alternatively, as shown in FIG. 8, in the first direction x, a second distance W3 of the connection row from the first stepped surface 2111 is not greater than a length W4 of the second stepped surface 2112 protruding from the first stepped surface 2111, where the second distance W3 is a distance from the first stepped surface 2111 at a position on the connection row farthest from the first stepped surface 2111 in the first direction x.

After the connection row is plugged with the first connector 31, in the second direction y, a first distance H3 from the second stepped surface 2112 at a position on the connection row farthest from the second stepped surface 2112 is set to be not greater than a length H4 of the first stepped surface 2111 protruding from the second stepped surface 2112, so as to ensure that after the connection row is plugged with the first connector 31, a space occupied in the second direction y is completely the space occupied by the first stepped surface 2111 without occupying the space of other areas inside the battery 10. Similarly, in the first direction x, a second distance W3 from the first stepped surface 2111 at a position on the connection row farthest from the first stepped surface 2111 is set to be not greater than a length W4 of the second stepped surface 2112 protruding from the first stepped surface 2111, so as to ensure that after the connection row is plugged with the first connector 31, a space occupied in the first direction x is completely the space occupied by the second stepped surface 2112, without occupying the space of other areas inside the battery 10.

According to an embodiment of the present application, a power consumption device is also provided, including the battery in the foregoing embodiment, where the battery being configured to provide electric energy. Optionally, the power consumption device may be a vehicle 1, a ship or a spacecraft, etc., but this is not limited by the embodiment of the present application.

The battery cell 20, the battery 10, and the power consumption device of the embodiments of the present application are described above, and a method and apparatus for producing a battery cell 20 of an embodiments of the present application will be described below. For the parts that are not described in detail, reference is made to the foregoing embodiments.

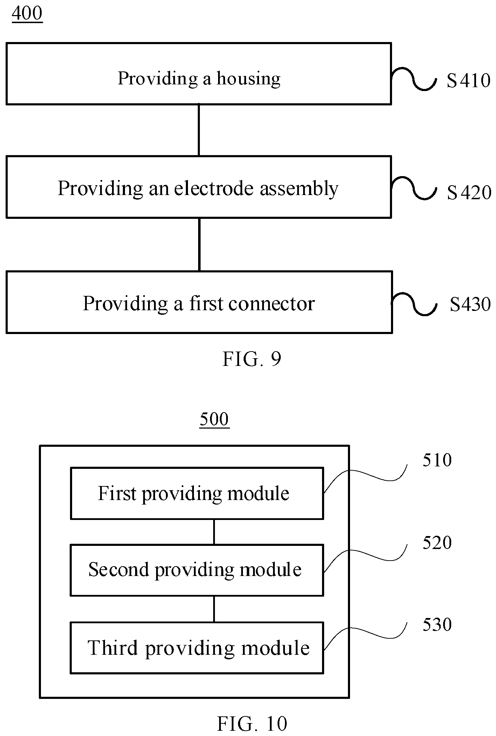

FIG. 9 shows a schematic flowchart of a method 400 for producing a battery cell 20 according to an embodiment of the present application. As shown in FIG. 9, the method 400 may include at least part of the following content:
S410, providing a housing 21, the housing 21 having a stepped structure 211 at an end portion in a first direction x;
S420, providing an electrode assembly, the electrode assembly being disposed within the housing 21, the electrode assembly including an electrode tab; and
S430, providing a first connector 31, the first connector 31 being disposed at the stepped structure 211, the first connector 31 including a first pin 311, and the first pin 311 being connected to the electrode tab of the electrode assembly, and the first connector 31 being configured to be capable of being plugged with an external connector 32 to achieve electrical connection between the battery cells 20.

FIG. 10 shows a schematic block diagram of an apparatus 500 for producing a battery cell 20 according to an embodiment of the present application. As shown in FIG. 10, the apparatus 500 includes:
a first providing module 510, configured to provide a housing 21, the housing 21 having a stepped structure 211 at an end portion in a first direction x;
a second providing module 510, configured to provide an electrode assembly, the electrode assembly being disposed within the housing 21, the electrode assembly including an electrode tab; and
a third providing module 520, configured to provide a first connector 31, the first connector 31 being disposed at the stepped structure 211, the first connector 31 including a first pin 311, and the first pin 311 being connected to the electrode tab of the electrode assembly, and the first connector 31 being configured to be capable of being plugged with an external connector 32 to achieve electrical connection between the battery cells 20.

Although the present application has been described with reference to the preferred embodiments, various improvements may be made to the present application and the components therein may be replaced with equivalents without departing from the scope of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A battery cell (20), comprising:
a housing (21), the housing (21) having a stepped structure (211) at an end portion in a first direction x;
an electrode assembly, disposed within the housing (21), the electrode assembly comprising an electrode tab; and
a first connector (31), disposed at the stepped structure (211), the first connector (31) comprising a first pin (311), and the first pin (311) being connected to the electrode tab of the electrode assembly, and the first connector (31) being configured to be capable of being plugged with an external connector (32) to achieve electrical connection.

2. The battery cell (20) according to claim 1, wherein the stepped structure (211) comprises a first stepped surface (2111) perpendicular to the first direction x and a second stepped surface (2112) perpendicular to a second direction y, the second direction y is perpendicular to the first direction x; the first connector (31) is disposed on the second stepped surface (2112), and the first pin (311) is parallel to the first stepped surface (2111) and extends in a third direction z; or the first connector (31) is disposed on the first stepped surface (2111), and the first pin (311) is parallel to the second stepped surface (2112) and extends in the third direction z; and the third direction z is perpendicular to the first direction x and the second direction y.

3. The battery cell (20) according to claim 2, wherein when the first connector (31) is disposed on the second stepped surface (2112), in the second direction y, a length of the first connector (31) protruding from the second stepped surface (2112) is not greater than a length of the first stepped surface (2111) protruding from the second stepped surface (2112); or when the first connector (31) is disposed on the first stepped surface (2111), in the first direction x, a length of the first connector (31) protruding from the first stepped surface (2111) is not greater than a length of the second stepped surface (2112) protruding from the first stepped surface (2111).

4. The battery cell (20) according to claim 2 or 3, wherein a length of the first connector (31) in the third direction z is not greater than a length of the housing (21) in the third direction z.

5. The battery cell (20) according to any one of claims 2 to 4, wherein the first connector (31) further comprises a first plugging frame (312), and the external connector (32) comprises a second plugging frame (322) and a second pin (321), and the first plugging frame (312) is configured to be plugged with the second plugging frame (322) such that the first pin (311) and the second pin (321) are connected.

6. The battery cell (20) according to any one of claims 2 to 5, wherein the electrode assembly comprises a first electrode tab and a second electrode tab, the housing (21) is provided with first connectors (31) at both ends in the first direction x, the first connectors (31) are respectively connected to the first electrode tab and the second electrode tab, and polarities of the first electrode tab and the second electrode tab are opposite.

7. The battery cell (20) according to any one of claims 2 to 6, wherein the first connector (31) further comprises a third pin (313) configured to sample the battery cell (20).

8. The battery cell (20) according to claim 7, wherein the first connector (31) further comprises a third plugging frame (314), the external connector (32) further comprises a fourth plugging frame (324) and a fourth pin (323), and the third plugging frame (314) is configured to be plugged with the fourth plugging frame (324) such that the third pin (313) and the fourth pin (323) are connected.

9. The battery cell (20) according to claim 8, wherein the first plugging frame (312) and the third plugging frame (314) are arranged in the third direction z, and the second plugging frame (322) and the fourth plugging frame (324) are arranged in the third direction z.

10. A battery (10), comprising:
a plurality of battery cells (20) according to any one of claims 1 to 9; and
a plurality of external connectors (32) configured to be plugged with first connectors (31) of the plurality of battery cells (20) respectively to electrically connect the plurality of battery cells (20).

11. The battery (10) according to claim 10, wherein the plurality of the external connectors (32) are integrally provided as a connection row.

12. The battery (10) according to claim 11, wherein the stepped structure (211) comprises a first stepped surface (2111) perpendicular to the first direction x and a second stepped surface (2112) perpendicular to a second direction y, the second direction y is perpendicular to the first direction x; and after the connection row is plugged with the first connector (31), in the second direction y, a first distance of the connection row from the second stepped surface (2112) is not greater than a length of the first stepped surface (2111) protruding from the second stepped surface (2112), wherein the first distance is a distance from the second stepped surface (2112) at a position on the connection row farthest from the second stepped surface (2112) in the second direction y; or in the first direction x, a second distance of the connection row from the first stepped surface (2111) is not greater than a length of the second stepped surface (2112) protruding from the first stepped surface (2111), wherein the second distance is a distance from the first stepped surface (2111) at a position on the connection row farthest from the first stepped surface (2111) in the first direction x.

13. A power consumption device, comprising:
the battery (10) according to any one of claims 10 to 12, the battery (10) being configured to provide electric energy for the power consumption device.

14. A method for producing a battery cell (20), comprising:
providing a housing (21), the housing (21) having a stepped structure (211) at an end portion in a first direction x;
providing an electrode assembly, the electrode assembly being disposed within the housing (21), the electrode assembly comprising an electrode tab; and
providing a first connector (31), the first connector (31) being disposed at the stepped structure (211), the first connector (31) comprising a first pin (311), and the first pin (311) being connected to the electrode tab of the electrode assembly, and the first connector (31) being configured to be capable of being plugged with an external connector (32) to achieve electrical connection.

15. An apparatus for producing a battery cell (20), comprising:
a first providing module, configured to provide a housing (21), the housing (21) having a stepped structure (211) at an end portion in a first direction x;
a second providing module, configured to provide an electrode assembly, the electrode assembly being disposed within the housing (21), the electrode assembly comprising an electrode tab; and
a third providing module, configured to provide a first connector (31), the first connector (31) being disposed at the stepped structure (211), the first connector (31) comprising a first pin (311), and the first pin (311) being connected to the electrode tab of the electrode assembly, and the first connector (31) being configured to be capable of being plugged with an external connector (32) to achieve electrical connection.
